Europäisches Patentamt

European Patent Office

Office européen des brevets

(19)

(11) EP 0 592 787 B1

## (12) EUROPÄISCHE PATENTSCHRIFT

(45) Veröffentlichungstag und Bekanntmachung des Hinweises auf die Patenterteilung:
**02.12.1998  Patentblatt 1998/49**

(51) Int Cl.$^6$: **H04R 3/02**

(21) Anmeldenummer: **93112859.9**

(22) Anmeldetag: **11.08.1993**

(54) **Verfahren zum Verbessern der akustischen Rückhördämpfung von elektroakustischen Anlagen**

Procedure for improvement of acoustic feedback suppression of electro-acoustic devices

Procédé pour améliorer l'affaiblissement du signal local sur des dispostifs électro-acoustiques

(84) Benannte Vertragsstaaten:
**AT BE CH DE ES FR GB IT LI NL SE**

(30) Priorität: **08.09.1992  DE 4229910**

(43) Veröffentlichungstag der Anmeldung:
**20.04.1994  Patentblatt 1994/16**

(73) Patentinhaber: **ALCATEL ALSTHOM COMPAGNIE GENERALE D'ELECTRICITE**
**75008 Paris (FR)**

(72) Erfinder:
• **Walker, Michael**
**D-73666 Baltmannsweiler (DE)**

• **Heitkämper, Peter**
**D-64846 Gross-Zimmern (DE)**

(74) Vertreter: **Müller, Joachim, Dipl.-Ing. et al**
**Alcatel Alsthom**
**Intellectual Property Department,**
**Postfach 30 09 29**
**70449 Stuttgart (DE)**

(56) Entgegenhaltungen:
**EP-A- 0 453 293          EP-A- 0 467 499**
**GB-A- 2 249 852**

**Beschreibung**

Die vorliegende Erfindung bezieht sich auf ein Verfahren zum Verbessern der akustischen Rückhördämpfung von elektroakustischen Anlagen gemäß dem Oberbegriff des Anspruchs 1.

Ein derartiges Verfahren ist aus der DE - A 37 24 346 bekannt. Durch den Kompander werden die vom Mikrophon gelieferten Signale, im folgenden Sendesignale genannt, soweit sie über einem Sollwert liegen, auf einen einheitlichen Signalpegel komprimiert, soweit sie den Sollwert aufweisen, maximal verstärkt, und soweit sie unter dem Sollwert liegen, expandiert. Die Kompander-Kennlinie LU2 = f (LU1) besitzt einen steilen Expansionsbereich und einen flachen Kompressionsbereich. Durch Rückführung der Ausgangssignale über einen Tiefpaß oder ein Bandfilter zum Eingang des Kompanders kann die Kennlinie verschoben und gegebenenfalls auch die Kennliniensteilheit im Expanderbereich verändert werden. Außerdem kann die Kennlinienverschiebung in Abhängigkeit von der Lautstärkeeinstellung im Empfangszweig bewirkt werden. Die Systemparameter werden in der Regel herstellerseitig auf übliche, akustische Umgebungsverhältnisse in einem Büroraum eingestellt. Liegen davon abweichende Verhältnisse vor, z.B. sehr hoher Geräuschpegel, so muß ein manueller Abgleich vorgenommen werden, da beim Ansteigen der Umgebungsgeräusche über den Einsatzpunkt der Expansion diese mit erhöhter Verstärkung übertragen werden.

Bei derartigen, elektroakustischen Anlagen, beispielsweise einem Telefon mit Freisprecheinrichtung, ist die akustische Rückhördämpfung von der Anordnung der Richtwirkung der Schallwandler im Gerät, von der Empfindlichkeit des verwendeten Mikrophons und der eingestellten Wiedergabelautstärke abhängig. Bei dem bekannten Kompanderverfahren ist auch eine vom Empfangssignal abhängige Kennlinienverschiebung möglich. Dabei kann der Expanderbereich so verschoben werden, daß das vom Lautsprecher abgestrahlte und am Mikrophon empfangene Signal immer sicher unterdrückt wird, wenn eine entsprechende, endgeräteseitige Einstellung vorgenommen, d.h. herstellerseitig durchgeführt wird.

Der vorliegenden Erfindung liegt die Aufgabe zugrunde, das bekannte Verfahren so auszugestalten und weiterzubilden, daß es auch für unbekannte oder sich verändernde Schallwandleranordnungen oder bei unbekannter Rückhördämpfung ohne manuellen Eingriff arbeitet. Die Aufgabe besteht daher im wesentlichen darin, die Rückhördämpfung automatisch an die unterschiedlichen Gegebenheiten anzupassen oder anpassen zu können.

Gelöst wir diese Aufgabe durch die im Anspruch 1 und im Anspruch 6 angegebenen Maßnahmen. Durch diesen Vergleich der Sprachpegel des Sendesignals und des Empfangssignals und Verwendung des Vergleichswertes zusammen mit dem aus dem Empfangssignal abgeleiteten Betrag des Empfangssignals zur Steuerung der Kennlinie des Kompanders wird eine adaptive Rückhördämpfung erreicht. Hierdurch ist das Verfahren z.B. für unterschiedliche Endgeräteausführungen und/oder Verwendung von Mikrophonen mit verschiedener Empfindlichkeit und/oder Schallwandler mit verschiedenen Wirkungsgraden etc. einsetzbar, ohne daß manuelle Einstellungen vorgenommen werden müssen.

Weitere vorteilhafte Einzelheiten der Erfindung sind in den Unteransprüchen angegeben und nachfolgend anhand der in der Zeichnung veranschaulichten Ausführungsbeispiele beschrieben. Es zeigen:

Fig. 1    ein Blockschaltbild einer Kompandersteuerung mit einer erfindungsgemäßen, adaptiven Rückhördämpfung,

Fig. 2    ein Flußdiagramm des Verfahrensablaufs und

Fig. 3    ein Blockschaltbild für eine digitale Auswertung und Steuerung.

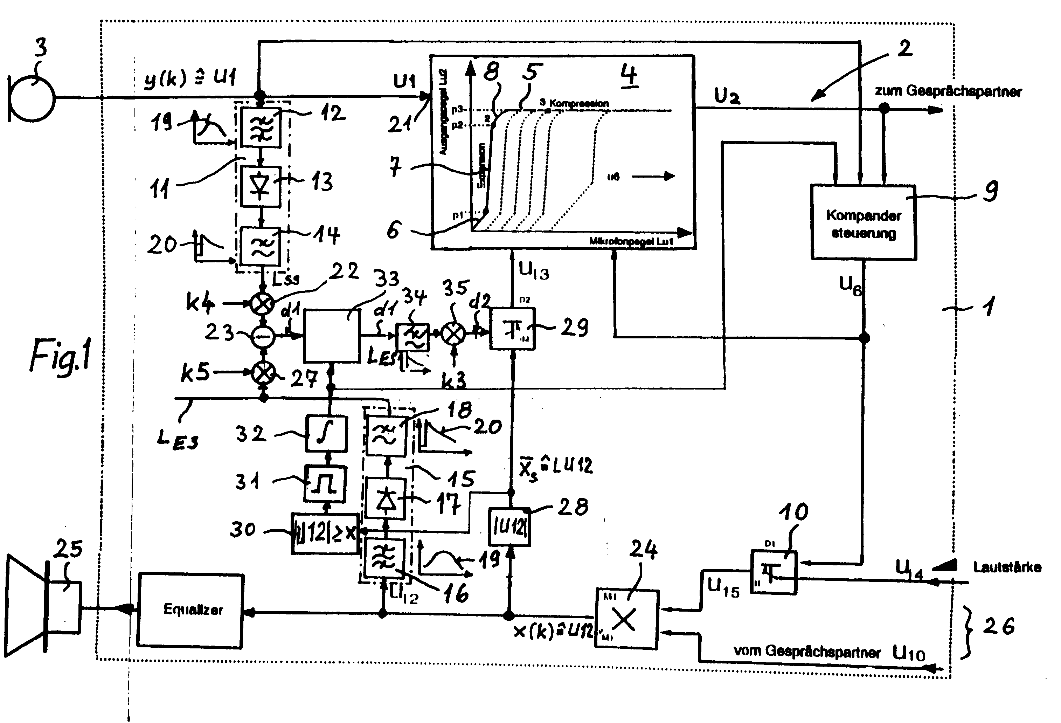

In Fig. 1 ist mit 1 eine elektroakustische Anlage in Form eines Telekommunikations-Endgerätes bezeichnet. Es besitzt einen Sendezweig 2 mit einem Mikrophon 3 und einem als Block dargestellten Kompander 4. Letzterer besitzt die aus der DE - A 37 24 346 bekannten Eigenschaften und Grundschaltungen wie Verstärker, Komparator, Kompressor und Expander sowie die zugehörigen Steuermittel etc.. Der Kompander besitzt eine charakteristische Kennlinie 5, LU2 = f(LU1), wobei U1 das vom Mikrophon gelieferte Sendesignal und U2 das vom Kompander an die Übertragungsleitung ausgegebene, modifizierte Sendesignal ist. Die Kennlinie 5 besitzt einen Anfangsbereich 6 unterhalb des Einsatzpunktes p1, in dem akustische Signale mit geringem Pegel nahezu vollkommen unterdrückt werden. Vom Punkt pl bis p2 erstreckt sich der Expansionsbereich 7, der ab p2 bis p3 in den Kompressionsbereich 8 übergeht und anschließend nahezu waagerecht verläuft. Im steilen, schmalen Expansionsbereich 7 werden über dem Pegel p1 liegende Signale verstärkt, im Punkt p2 maximal verstärkt und ab dem Punkt p3 komprimiert, so daß ab p3 ein einheitlicher Sendepegel erhalten wird. Die Kennliniensteuerung durch Verschieben der Kennlinie nach rechts - angedeutet durch das gestrichelte Kennlinienfeld - erfolgt über die Kompandersteuerung 9, über die auch z.B. bei erhöhter Dämpfung über ein steuerbares Dämpfungsglied 10 die Empfangslautstärke angehoben werden kann.

Zur Erzeugung der adaptiven Rückhördämpfung ist ein Sprachdetektor 11 vorgesehen, der ein Bandfilter 12, einen Gleichrichter 13 und einen ausgangsseitigen Tiefpaß 14 aufweist. Dem Sprachdetektor 11 wird das Sendesignal U1 zugeführt. Weiterhin ist ein Sprachdetektor 15 mit einem Bandfilter 16, Gleichrichter 17 und Tiefpaß 18 vorgesehen, dem das Empfangssignal U12 zugeführt wird. Die Bandfilter 12, 16 sind vorzugsweise so ausgelegt, daß sie die im Sprachfrequenzspektrum am stärksten auftretenden Frequenzen bevorzugen. Dies ist durch die die Filtercharakteristik darstellenden Kurven 19 veranschaulicht.

Die Tiefpässe 14 und 18 sind so ausgelegt, daß sie eine steile Anstiegsflanke, also eine kurze Anstiegszeit z.B. 5 ms bis 20 ms, insbesondere etwa 10 ms und eine langsam fallende Abfallflanke und somit lange Abfallzeit von z.B. 30 ms bis 100 ms, insbesondere etwa 65 ms besitzen, wie durch die Kurven 20 angedeutet.

Das zum Sprachdetektor 11 geleitete Sendesignal U1 wird zwischen Mikrophon 3 und Eingang 21 des Kompanders 4 abgegriffen und durch den Sprachdetektor 11 ein dem Spitzenwert des Sprachsignals entsprechender Sprachpegel $L_{ss}$ über einen Multiplizierer 22 an einen Detektor 23, z.B. einen Differenzwert- und Schwellenwertdetektor, zugeführt.

Das Empfangssignal U12 wird zwischen einem Lautstärkesteller 24 und einem Lautsprecher 25 des Empfangszweiges 26 abgegriffen und dem Sprachdetektor 15 zugeführt. Von diesem wird ein Empfangspegel $L_{ES}$ ausgegeben und über einen Multiplizierer 27 an den Differenz- und Schwellenwertdetektor 23 angelegt. Der Empfangspegel $L_{ES}$ kann über den Multiplizierer 27 mit einem Gewichtungsfaktor k5 und der Sendepegel $L_{ss}$ über den Multiplizierer 22 bei Bedarf mit einem Gewichtungsfaktor k4 gewichtet werden, so daß der Wert des Sendepegels und der Wert des Empfangspegels aneinander angepaßt werden können.

Das zwischen Lautstärkesteller 24 und Lautsprecher 25 abgreifbare Empfangssignal U12 wird einem Funktionsblock 28 zugeführt, der den Betrag IU12I des Empfangssignals generiert und einem steuerbaren Dämpfungsglied 29 zuleitet, dessen Ausgang ein Steuersignal U13 zur Kennliniensteuerung in Papierebene nach rechts ausgibt. Außerdem wird der Betrag IU12I des Empfangssignals U12 über einen Schwellenwertdetektor 30 unmittelbar oder über einen Pulsformer 31 und einen Integrator 32 an eine Schalteinrichtung 33 angelegt.

Der Schalteinrichtung 33 wird auch der vom Detektor 23 ausgegebene Vergleichswert d1 zugeführt, der in Abhängigkeit von einem vom Integrator 32 ankommenden Steuersignal unmittelbar oder zweckmäßig über einen Tiefpaß 34 und einen Multiplizierer 35 dem Dämpfungsglied 29 zugeleitet wird.

Der Tiefpaß 34 ist so ausgelegt, daß er eine lange Abfallzeit, z.B. etwa 200 ms bis 5 s, und eine kurze Anstiegszeit, z.B. etwa 1 ms bis 100 ms besitzt. Der Kurzzeitwert kann etwa dem der Tiefpässe 14, 18 entsprechen oder ist vorzugsweise kürzer und sein Langzeitwert ist länger als derjenige der Tiefpässe 14, 18. Durch den Multiplizierer 35 kann der Vergleichswert d2 mit einem Gewichtungsfaktor k3 gewichtet und an unterschiedliche Gegebenheiten zur richtigen oder optimalen Kennliniensteuerung angepaßt werden.

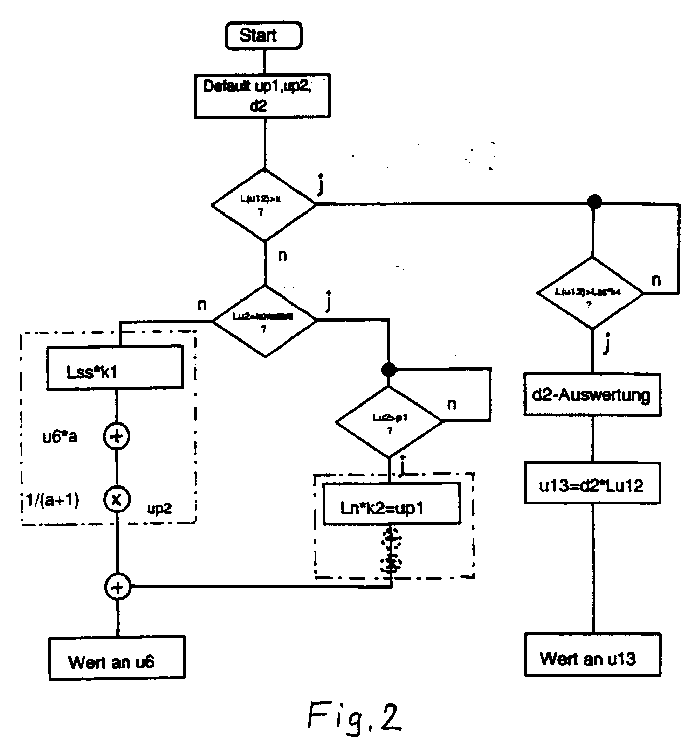

Während des Betriebes der Anlage läuft folgender, anhand des in Fig. 2 dargestellten Flußdiagramms dargestellter Prozeß ab:

Nach dem Start erfolgt eine Grundeinstellung der Kennlinie entsprechend einem voreingestellten, z.B. auf akustisch ruhige, übliche Büroumgebung angepaßten Grundpegel. Dabei wird vom Schwellenwertdetektor 30 ermittelt, ob ein Betrag IU12I eines Empfangssignals U12 vorliegt, der größer ist als ein vorbestimmter Sollwert x.

Gleichzeitig wird bei vorhandenem Sendesignal U1 ein Sprachpegel $L_{ss}$ generiert und mit k4 gewichtet und vom Empfangssignal U12 über den Sprachdetektor 15 der Empfangspegel $L_{ES}$ erzeugt. Der Detektor 23 stellt an seinem Ausgang den Vergleichswert d1, z.B. die Differenz von $L_{ss}$ und $L_{ES}$, zur Verfügung.

Falls der Betrag IU12I des Empfangssignals U12 größer ist als der Schwellenwert x, schaltet die Schalteinrichtung 33, z.B. ein Sample-und-Hold-Glied, den Vergleichswert d1 über den Tiefpaß 34 und den Multiplizierer an das steuerbare Dämpfungsglied 29. Dies ist ein Fall, bei dem infolge der ermittelten Werte ein Rückhörsignal auftritt, so daß die Rückhördämpfung angehoben werden muß. Dies geschieht über das steuerbare Dämpfungsglied 29 durch Bereitstellung des Steuersignals U13, das aus dem Betrag IU12I abgeleitet wird und deren Größe vom Vergleichswert d2 bestimmt wird. Die Kennlinie 5 wird bei vorhandenem Betrag IU12I in Abhängigkeit von d2 nach rechts in Richtung höherer Dämpfung verschoben. Hierdurch wird eine Echobildung vollkommen vermieden oder auf ein nicht mehr störendes Maß unterdrückt.

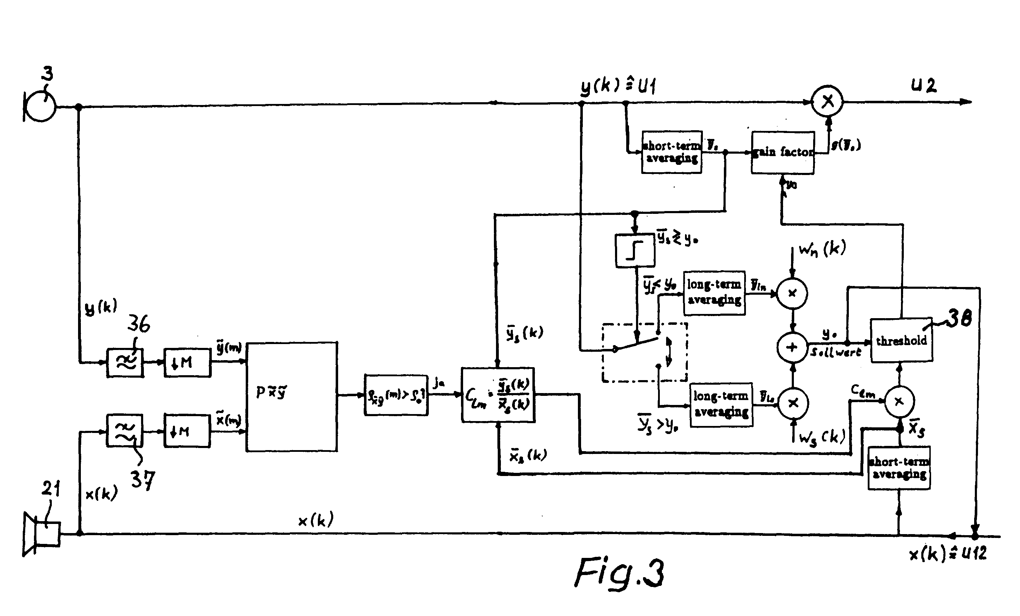

In Fig. 3 ist ein Blockschaltbild für ein anderes Lösungsprinzip dargestellt, bei dem eine digitale Verarbeitung der Signale erfolgt. Natürlich wäre auch eine entsprechende Analoglösung möglich. Hierbei entsprechen die zum Zeitpunkt k abgetasteten Sendesignale y (k) der bisherigen Bezeichnung U1 und die Empfangssignale x (k) der bisherigen Bezeichnung U12. Es sind auch hier Tiefpässe vorhanden, die eine kurze Anstiegszeit und lange Abfallzeit zur Spracherkennung und eine lange Anstiegszeit und kurze Abfallzeit zur Geräuscherkennung aufweisen. Entsprechend ist jeweils ein Kurzzeitbetrags-Mitelwert $\bar{y}_s$ bzw. $\bar{x}_s$ des Sende- bzw. Empfangssignals y (k) bzw. x (k) sowie ein Langzeitbetrags-Mittelwert $\bar{y}_{ln}$ für den Geräuschanteil im Sendesignal y (k) und ein Langzeitbetrag-Mittelwert $\bar{y}_{ls}$ für den Sprachanteil ermittelbar.

Über diese erfolgt eine sprachgesteuerte Kennlinienverschiebung bzw. Berechnung, indem der Verstärkungsfaktor $g (\bar{y}_s)$ aus dem Wert von $\bar{y}_s$ und dem aus den Langzeitbetrags-Mittelwerten $\bar{y}_{ln}$ und $\bar{y}_{ls}$ gebildeten Sollwert des dem vorbeschriebenen Punkt 2 der Kennlinie entsprechenden Schwellenwert $y_o$ für den Einsatz der Kompression ermittelt oder berechnet wird.

Zur Verbesserung der Rückhördämpfung und noch besseren Echounterdrückung und zur Anpassung an das akustische System durch Kennliniensteuerung wird hier ein Lautsprecher-Mikrophon-Kopplungsfaktor $C_{lm}$ aus dem Ver-

hältnis des Kurzzeitbetrags-Mittelwertes des Sendesignals $\bar{y}_s$ und demjenigen des Empfangssignals $\bar{x}_s$ gebildet und der erhaltene Wert zusätzlich zur Kennliniensteuerung verwendet, indem er mit dem Kurzzeitbetrags-Mittelwert $\bar{x}_s$ des Empfangssignals x (k) multipliziert und zur Kennliniensteuerung bzw. -berechnung herangezogen wird.

Eine Neuberechnung des Lautsprecher-Mikrophon-Kopplungsfaktors $C_{lm}$ erfolgt jeweils dann, wenn im Sendesignal y (k) vom Lautsprecher 21 auf das Mikrophon 3 übergekoppelte starke Empfangssignale auftreten.

Hierzu wird eine Korrelationsmessung durchgeführt. Das Sendesignal y (k) und das Empfangssignal x (k) werden hierzu getrennt über je einen Tiefpaß 36 bzw. 37 geleitet und anschließend von den k Abtastwerten jeweils nur der M-te Abtastwert verwendet, wobei M etwa 5 bis 20, insbesondere 8 sein kann. Es wird so je eine Hüllkurve aus den Werten $\bar{y}$ (m) und $\bar{x}$ (m) gebildet. Aus den einzelnen Werten kann gemäß der Formel

$$\rho_{\bar{x}\bar{y}}(m) = \frac{\left| \sum_{n=0}^{N} \bar{x}(m-n)\bar{y}(m-n) \right|}{\sum_{n=0}^{N} \left| \bar{x}(m-n)\bar{y}(m-n) \right|}$$

der Korrelationsfaktor $\rho_{\bar{x}\bar{y}}$ (m) berechnet werden, der ein Maß für die vom Lautsprecher 21 auf das Mikrophon 3 gekoppelten Signale ist und mit zunehmender Abweichung der Einzelfaktoren voneinander von 1 gegen 0 geht.

Der berechnete Korrelationsfaktor $\rho_{\bar{x}\bar{y}}$ (m) wird dann mit einem vorgegebenen Sollwert $\rho$o, der z.B. 0,9 betragen kann, verglichen. Bei ausreichend hohem Korrelationsfaktor, d.h., wenn der berechnete größer ist als der Sollwert $\rho$o, wird eine Neuberechnung des Lautsprecher-Mikrophon-Kopplungsgrades $C_{lm}$ durchgeführt und die Kennliniensteuerung dann mit dem neuen Wert vorgenommen bzw. die Kennlinienwerte neu berechnet.

Ein Maximalwertdetektor oder -entscheider 38 bestimmt, ob der Wert $y_o$ oder das Produkt aus $C_{lm}$ und $x_s$ zur Kennliniensteuerung oder -berechnung herangezogen wird.

Die Kurzzeitbetrags-Mittelwerte $\bar{y}_s$ (k) des Sendesignals y (k) oder $\bar{x}_s$ (k) des Empfangssignals x (k) können nach folgender Formel berechnet werden:

$$\bar{Z}_s (k) = (1 - a_f) | Z (k) | + a_f \bar{Z}_s (k - 1),$$

für fallende Pegel
wenn

$$| Z (k) | \leq \bar{Z}_s (k - 1)$$

und

$$\bar{Z}_s (k) = (1 - a_r) | Z (k) | + a_r \bar{Z}_s (k - 1),$$

für steigende Pegel wenn

$$| Z (k) | > \bar{Z}_s (k - 1)$$

ist
mit

z = y    zur Berechnung des Wertes aus dem Sendesignal y (k),
z = x    zur Berechnung des Wertes aus dem Empfangssignal x (k),
$a_f$ =    Parameter der Zeitkonstante für fallende Pegel und
$a_r$ =    Parameter der Zeitkonstante für steigende Pegel.

Bei Realisierung des Kompanders 4 durch einen digitalen Signalprozessor DSP ist die Kennlinie in Form einer Grundkennlinie in einem dem Signalprozessor DSP zugeordneten Speicher als Digitalwerte abgespeichert. Die Kennlinienänderung erfolgt z.B. durch mathematische Operationen der gespeicherten Werte mit den berechneten Werten von $C_{lm}$, $y_o$, $y_s$ etc..

## Patentansprüche

1. Verfahren zum Verbessern der akustischen Rückhördämpfung von elektroakustischen Anlagen (1), die einen Sendezweig (2) mit wenigstens einem Mikrophon (3) und einem Sendeverstärker und einen Empfangszweig (26) mit einem Empfangsverstärker und wenigstens einem Lautsprecher (25) sowie zur adaptiven Dynamiksteuerung einen Kompander (4) aufweisen, dessen Einsatzpunkte der Kompression und der Expansion in Abhängigkeit vom Vorhandensein von Sende-, Empfangs-, Echo- und Geräuschsignalen dadurch veränderbar eingestellt werden, daß diese Signale festgestellt und deren Pegel entsprechende Steuersignale erzeugt und zur Kompandersteuerung durch Kennlinienänderung und/oder -Verschiebung der Kompander-Kennlinie (5) verwendet werden, insbesondere zum Verbessern der Rückhör- und Echodämpfung eines eine Freisprecheinrichtung aufweisenden Telekommunikation-Endgerätes,
   **dadurch gekennzeichnet,** daß vom Sendezweig (2) zwischen Mikrophon (3) und Kompander (4) das Sendesignal (U1) abgegriffen und einem Sprachdetektor (11) zugeführt und ein dem Sprachanteil entsprechender Sendepegel ($L_{ss}$) ermittelt wird;
   daß vom Empfangszweig (26) zwischen einem Lautstärkesteller (24) und dem Lautsprecher (25) das Empfangssignal (U12) abgegriffen und einem Sprachdetektor (15) zugeführt und ein dem Sprachanteil des Empfangssignals (U12) entsprechender Empfangspegel (LES) ermittelt wird;
   daß der Sendepegel ($L_{ss}$) und/oder der Empfangspegel (LES) mit einem Gewichtungsfaktor (k4 bzw. k5) gewichtet und dann die beiden Pegel ($L_{ss} \cdot$ k4; LU12 $\cdot$ k5) miteinander verglichen werden und der erhaltene Vergleichswert (d1) zusammen mit dem aus dem Empfangssignal (U12) abgeleiteten Betrag des Empfangssignals (U12) das zur Kennliniensteuerung notwendige Steuersignal (U13) bestimmt, das zur Kennliniensteuerung verwendet wird.

2. Verfahren nach Anspruch 1,
   dadurch gekennzeichnet, daß Sprachdetektoren (11; 15) mit jeweils einem Sprachfilter (12; 16) verwendet werden, die vor allem die im Sprachfrequenzbereich am stärksten auftretenden Sprachfrequenzen herausfiltern und daß jeweils ausgangsseitig ein Tiefpaß (14; 18) verwendet wird, der eine kurze Anstiegszeitkonstante ($a_r$) und eine lange Abfallzeitkonstante ($a_f$) aufweist.

3. Verfahren nach Anspruch 1,
   dadurch gekennzeichnet, daß das Steuersignal (U13) aus dem Betrag des Empfangssignals (IU12I) gebildet wird und dessen Größe in Abhängigkeit vom Vergleichswert (d1; d2) verändert wird.

4. Verfahren nach Anspruch 3,
   dadurch gekennzeichnet, daß der Vergleichswert (d1) mit einem Gewichtungsfaktor (k3) gewichtet und dieser zur Kennliniensteuerung verwendet wird.

5. Verfahren nach Anspruch 3,
   dadurch gekennzeichnet, daß der Betrag des Empfangssignals (IU12I) einem Schwellendetektor (30) zugeführt und bei größerem Betragswert als dem Schwellenwert der Vergleichswert (d1) über eine Schalteinrichtung (33) einem Integrator (34) zugeführt wird und mit dessen Ausgangswert (d2) die Stärke der Kennliniensteuerung bestimmt wird.

6. Verfahren zum Verbessern der akustischen Rückhördämpfung von elektroakustischen Anlagen (1), die einen Sendezweig (2) mit wenigstens einem Mikrophon (3) und einem Sendeverstärker und einen Empfangszweig (26) mit einem Empfangsverstärker und wenigstens einem Lautsprecher (25) sowie zur adaptiven Dynamiksteuerung einen Kompander (4) aufweisen, dessen Einsatzpunkte der Kompression und der Expansion in Abhängigkeit vom Vorhandensein von Sende-, Empfangs-, Echo- und Geräuschsignalen dadurch veränderbar eingestellt werden, daß diese Signale festgestellt und deren Pegel entsprechende Steuersignale erzeugt und zur Kompandersteuerung durch Kennlinienänderung und/oder -Verschiebung der Kompander-Kennlinie (5) verwendet werden, insbesondere zum Verbessern der Rückhör- und Echodämpfung eines eine Freisprecheinrichtung aufweisenden Telekommunikation-Endgerätes, dadurch gekennzeichnet,

- daß der Kompander (4) durch einen digitalen Signalprozessor realisiert wird und in einem diesem zugeordneten Speicher die Grundform der Kennlinie (5) in digitaler Form abgespeichert wird,

- daß das Verhältnis

$$\left( \frac{\overline{\overline{y_s}}}{\overline{\overline{x_s}}} \right)$$

aus dem Kurzzeitbetrags-Mittelwert

$$\left( \overline{y_s} \right)$$

des Sendesignals (y(k)) und dem Kurzzeitbetrags-Mittelwert des

$$\left( \overline{x_s} \right)$$

Empfangssignals (x(k)) berechnet und als Lautsprecher-Mikrophon-Kopplungsfaktor ($C_{lm}$) zur Verfügung gestellt wird,

- daß der Einsatzpunkt ($y_o$) der Kompression aus dem Maximalwert des aus den Langzeitpegeln ($\bar{y}_{ln}$ und $\bar{y}_{ls}$) des Sendesignals (y (k)) berechneten Sollwerts und aus dem Produkt des Lautsprecher-Mikrophon-Kopplungsfaktors ($C_{lm}$) und dem Kurzzeitbetrags-Mittelwert ($\bar{x}_s$) gebildet wird, und

- daß weiterhin durch Korrelation des Sendesignals (y(k)) mit dem Empfangssignal (x(k)) ein Korrelationsfaktor ($\rho\overline{xy}$ (m)) gebildet oder berechnet wird und dann, wenn dieser größer ist als ein Sollwert ($\rho o$), der Lautsprecher-Mikrophon-Kopplungsfaktor ($C_{lm}$) neu berechnet und dieser dann zur Berechnung des Einsatzpunktes ($y_o$) verwendet wird.

7. Verfahren nach Anspruch 6,
dadurch gekennzeichnet, daß die Abtastwerte (y (k); x (k)) des Sendesignals und des Empfangssignals über je einen Tiefpaß (36; 37) geleitet und anschließend jeweils nur der M-te Abtastwert (y'(m); x'(m)) von k Abtastwerten abgetastet und zur weiteren Berechnung zur Verfügung gestellt, und aus diesen der Korrelationsfaktor ($\rho\overline{xy}$ (m)) berechnet und mit einem Korrelationssollwert ($\rho o$) verglichen wird.

8. Verfahren nach Anspruch 7,
dadurch gekennzeichnet, daß der Korrelationsfaktor ($\rho\overline{xy}$ (m)) nach der Formel berechnet wird:

$$\rho_{\bar{x}\bar{y}}(m) = \frac{\left| \sum\limits_{n=0}^{N} \bar{x}(m-n)\bar{y}(m-n) \right|}{\sum\limits_{n=0}^{N} \left| \bar{x}(m-n)\bar{y}(m-n) \right|}$$

mit m = der Zeitpunkt, zu dem der Korrelationsfaktor berechnet wird.

9. Verfahren nach Anspruch 8,
dadurch gekennzeichnet, daß ein Abtast-Dezimierungsfaktor (M) von etwa 5 bis 20, insbesondere 8 bis 10, verwendet wird.

10. Verfahren nach Anspruch 6,
dadurch gekennzeichnet, daß die Kurzzeitbetrags-Mittelwerte ($y_s$ (k) und $x_s$ (k)) des Sende- und des Empfangssignals (y (k); x (k)) nach folgender Formel berechnet werden:

$$\overline{Z}_s \, (k) = (1 - a_f) \, | \, Z \, (k) \, | + a_f \, \overline{Z}_s \, (k - 1),$$

für fallende Pegel
wenn

$$| Z \, (k) \, | \leq \overline{Z}_s \, (k - 1)$$

und

$$\overline{Z}_s \, (k) = (1 - a_r) \, | \, Z \, (k) \, | + a_r \, \overline{Z}_s \, (k - 1),$$

für steigende Pegel
wenn

$$| Z \, (k) \, | > \overline{Z}_s \, (k - 1) \text{ ist}$$

mit

$z = y$     zur Berechnung des Wertes aus dem Sendesignal (y (k)),

$z = x$     zur Berechnung des Wertes aus dem Empfangssignal (x(k)),

$a_f =$     Parameter der Zeitkonstante für fallende Pegel und

$a_r =$     Parameter der Zeitkonstante für steigende Pegel.

**Claims**

1. Method of improving the acoustic sidetone attenuation in electroacoustic systems (1) which have a transmission branch (2) having at least one microphone (3) and a transmission amplifier and a reception branch (26) having a receiving amplifier and at least one loudspeaker (25), and also a compander (4) for adaptive dynamic-range control whose compression and expansion onset points can be variably adjusted as a function of the presence of transmitted, received, echo and noise signals by detecting said signals and generating control signals according to their level and using said control signals to control the compander by changing and/or shifting the compander characteristic curve (5), in particular for improving the sidetone attenuation and echo attenuation of a telecommunications terminal having a hands-free facility, characterized

in that the transmitted signal (U1) is taken from the transmission branch (2) between microphone (3) and compander (4) and fed to a speech detector (11) and a transmission level ($L_{ss}$) corresponding to the speech component is determined,

in that the received signal (U12) is taken from the reception branch (26) between a volume control (24) and the loudspeaker (25) and fed to a speech detector (15) and a reception level (LES) corresponding to the speech component of the received signal (U12) is determined,

in that the transmission level ($L_{ss}$) and/or the reception level (LES) are/is weighted with a weighting factor (k4 or k5) and then the two levels ($L_{ss}\cdot k4$; $LU12\cdot k5$) are compared with one another and the comparison value (dl), together with the modulus of the received signal (U12) derived from the received signal (U12), determines the control signal (U13) necessary to control the characteristic curve, which control signal is used to control the characteristic curve.

2. Method according to Claim 1, characterized in that use is made of speech detectors (11; 15) which each comprise a speech filter (12; 16) which primarily filter out the strongest speech frequencies occurring in the speech-frequency range and in that a low-pass filter (14; 18) which has a short time constant of rise ($a_r$) and a long time constant of fall ($a_f$) is used at each output.

3. Method according to Claim 1, characterized in that the control signal (U13) is formed from the modulus of the received signal (IU12I) and its magnitude is varied as a function of the comparison value (d1; d2).

4. Method according to Claim 3, characterized in that the comparison value (dl) is weighted with a weighting factor (k3) and the latter is used to control the characteristic curve.

5. Method according to Claim 3, characterized in that the modulus of the received signal (IU12I) is fed to a threshold detector (30) and if said modulus value is greater than the threshold value, the comparison value (d1) is fed via a switching device (33) to an integrator (34) and the intensity of the characteristic curve control is determined using the output value (d2) of the latter.

6. Method of improving the acoustic sidetone attenuation of electroacoustic systems which have a transmission branch (2) comprising at least one microphone (3) and a transmission amplifier and a reception branch (26) having a reception amplifier and at least one loudspeaker (25) and also a compander (4) for adaptive dynamic-range control whose compression and expansion onset points are variably adjusted as a function of the presence of transmitted, received, echo and noise signals by detecting said signals, generating control signals according to their level and using said control signals to control the compander by changing and/or shifting the compander characteristic curve (5), in particular for improving the sidetone and echo attenuation of a telecommunications terminal having a hands-free facility, characterized

- in that the compander (4) is embodied by a digital signal processor and the basic form of the characteristic curve (5) is stored in digital form in a memory associated with said digital signal processor,

- in that the ratio

$$\left( \frac{\overline{y}_s}{\overline{x}_s} \right)$$

is calculated from the short-term absolute average value ($\overline{y}_s$) of the transmitted signal ((y(k)) and the short-term absolute average value ($\overline{x}_s$) of the received signal (x(k)) and is made available as a loudspeaker-microphone coupling factor ($C_{lm}$),

- in that the compression onset point ($y_o$) is formed from the maximum value of the desired value calculated from the long-term levels ($\overline{y}_{ln}$) and ($\overline{y}_{ls}$) of the transmitted signal (y(k)) and from the product of the loudspeaker-microphone coupling factor ($C_{lm}$) and the short-term absolute average value ($\overline{x}_s$), and

- in that a correlation factor ($\rho\overline{xy}(m)$) is furthermore formed or calculated by correlating the transmitted signal (y(k)) with the received signal (x(k)) and then, if said correlation factor is greater than a desired value ($\rho_0$), the loudspeaker-microphone coupling factor ($C_{lm}$) is recalculated and is then used to calculate the onset point ($y_0$).

7. Method according to Claim 6, characterized in that the sample values (y(k); x(k)) of the transmitted signal and of the received signal are each fed via a low-pass filter (36; 37) and then only the Mth sample value (y'(m) ; x'(m)) is sampled in each case from k sample values and made available for the further calculation, and from said sample values, the correlation factor ($\rho\overline{xy}(m)$) is calculated and compared with a desired correlation value ($\rho_0$).

8. Method according to Claim 7, characterized in that the correlation factor ($\rho\overline{xy}(m)$) is calculated using the formula

$$\rho_{\bar{x}\bar{y}}(m) = \frac{\left|\sum_{n=0}^{N} \bar{x}(m-n)\bar{y}(m-n)\right|}{\sum_{n=0}^{N} |\bar{x}(m-n)\bar{y}(m-n)|}$$

where m equals the time at which the correlation factor is calculated.

9. Method according to Claim 8, characterized in that a sampling decimizing factor (M) of about 5 to 20, in particular 8 to 10, is used

10. Method according to Claim 6, characterized in that the short-term absolute average values ($y_s(k)$ and $x_s(k)$) of the transmitted and received signals (y(k); x(k)) are calculated using the following formula:

$$\overline{Z}_s(k) = (1 - a_f)\,|Z(k)| + a_f\,\overline{Z}_s(k-1),$$

for falling level if

$$|Z(k)| \leq \overline{Z}_s(k-1)$$

and

$$\overline{Z}_s(k) = (1 - a_r)\,|Z(k)| + a_r\,\overline{Z}_s(k-1),$$

for rising level
if

$$|Z(k)| > \overline{Z}_s(k-1)$$

where

$z = y$     for calculating the value from the transmitted signal (y(k)),

$z = x$     for calculating the value from the received signal (x(k)),

$a_f =$     parameter of the time constant for falling level and

$a_r =$     parameter of the time constant for rising level.

**Revendications**

1. Procédé pour améliorer l'affaiblissement acoustique du signal local sur des installations électroacoustiques (1) comportant une branche d'émission (2) avec au moins un microphone (3) et un amplificateur d'émission et une branche de réception (26) avec un amplificateur de réception et au moins un haut-parleur (25) ainsi que pour la commande adaptative de la puissance sonore un compresseur-expanseur (4) dont les points d'application de la compression et de l'expansion sont réglés de façon variable en fonction de la présence de signaux d'émission, de réception, d'écho et de bruit en ce que ces signaux sont déterminés et leur niveau produit des signaux de commande correspondants et en ce qu'ils sont utilisés pour la commande du compresseur-expanseur par une modification et/ou un décalage des caractéristiques de la courbe caractéristique (5) du compresseur-expanseur, en particulier pour améliorer l'affaiblissement du signal local ou des courants d'écho d'un terminal de télécommunication muni d'un dispositif mains libres, caractérisé en ce que le signal d'émission (U1) est prélevé de la branche d'émission (2) entre le microphone (3) et le compresseur-expanseur (4) et transmis à un détecteur vocal (11) et en ce qu'un niveau d'émission ($L_{ss}$) correspondant à la composante vocale est déterminé;

en ce que le signal de réception (U12) est prélevé de la branche de réception (26) entre un régulateur de volume (24) et le haut-parleur (25) et est transmis à un détecteur vocal (15) et en ce qu'un niveau de réception ($L_{ES}$) correspondant à la composante vocale du signal de réception (U12) est déterminé;

en ce que le niveau d'émission ($L_{ss}$) et/ou le niveau de réception ($L_{ES}$) sont pondérés avec un facteur de pondération (k4 ou k5) et ensuite, en ce que les deux niveaux ($L_{ss} \bullet k4$; $LU12 \bullet k5$) sont comparés et la valeur de comparaison obtenue (d1) détermine avec la valeur dérivée du signal de réception (U12) du signal de réception (U12) le signal de commande (U13) nécessaire à la commande des caractéristiques qui est utilisé pour la commande des caractéristiques.

2. Procédé selon la revendication 1 caractérisé en ce que les détecteurs vocaux (11; 15) sont utilisés respectivement avec un filtre vocal (12; 16) qui filtre surtout les fréquences vocales les plus représentées dans la zone des fréquences vocales, et en ce qu'à chaque sortie, un passe-bas (14; 18) est utilisé qui présente une constante de temps de croissance ($a_r$) courte et une constante de temps de décroissance ($a_f$) longue.

3. Procédé selon la revendication 1, caractérisé en ce que le signal de commande (U13) est formé à partir de la valeur du signal de réception (IU12I) et sa grandeur est modifiée en fonction de la valeur de comparaison (d1; d2).

4. Procédé selon la revendication 3, caractérisé en ce que la valeur de comparaison (dl) est pondérée avec un facteur de pondération (k3) et celui est utilisé pour la commande des caractéristiques.

5. Procédé selon la revendication 3, caractérisé en ce que la valeur du signal de réception (IU12I) est transmise à un détecteur de seuil (30), et si la valeur est supérieure à la valeur de seuil, la valeur de comparaison (dl) est transmise par l'intermédiaire d'un mécanisme de couplage (33) à un intégrateur (34) et la force de la commande des caractéristiques est déterminée par sa valeur de sortie (d2).

6. Procédé pour améliorer l'affaiblissement acoustique du signal local sur des installations électroacoustiques (1) comportant une branche d'émission (2) avec au moins un microphone (3) et un amplificateur d'émission et une branche de réception (26) avec un amplificateur de réception et au moins un haut-parleur (25) ainsi que pour la commande adaptative de la puissance sonore un compresseur-expanseur (4) dont les points d'application de la compression et de l'expansion sont réglés de façon variable en fonction de la présence de signaux d'émission, de réception, d'écho et de bruit, en ce que ces signaux sont déterminés et leur niveau produit des signaux de commande correspondants et en ce qu'ils sont utilisés pour la commande du compresseur-expanseur par une modification et/ou un décalage des caractéristiques de la courbe caractéristique (5) du compresseur-expanseur, en particulier pour améliorer l'affaiblissement du signal local ou des courants d'écho d'un terminal de télécommunication muni d'un dispositif mains libres, caractérisé en ce que

- le compresseur-expanseur (4) est réalisé par un processeur numérique de signaux et en ce que la forme de base de la courbe caractéristique (5) est mémorisée sous forme numérique dans une mémoire attribuée à celui-ci,
- en ce que le rapport

$$\left( \frac{\overline{y}_s}{\overline{x}_s} \right)$$

est calculé à partir de la moyenne des valeurs à court terme ($\overline{y}_s$) du signal d'émission (y(k)) et de la moyenne des valeurs à court terme ($\overline{x}_s$) du signal de réception (x(k)) et en ce que le facteur de couplage haut-parleur/

microphone ($C_{lm}$) est fourni,

- en ce que le point d'application ($y_o$) de la compression est établi à partir de la valeur maximale de la valeur de consigne calculée à partir des niveaux à long terme ($\bar{y}_{ln}$ et $\bar{y}_{ls}$) du signal d'émission ($y(k)$) et à partir du produit du facteur de couplage haut-parleur/ microphone ($C_{lm}$) et de la moyenne des valeurs à court terme ($\bar{x}_s$), et

- en outre en ce que, par corrélation du signal d'émission ($y(k)$) avec le signal de réception ($x(k)$), un facteur de corrélation ($\rho\bar{x}\,\bar{y}\,(m)$) est établi ou calculé, et ensuite, quand celui-ci est supérieur à une valeur de consigne ($\rho o$), le facteur de couplage haut-parleur/ microphone ($C_{lm}$) est recalculé, et en ce que celui-ci est alors utilisé pour calculer le point d'application ($y_o$).

7. Procédé selon la revendication 6, caractérisé en ce que les valeurs de balayage ($y(k)$; $x(k)$) du signal d'émission et du signal de réception sont transmis respectivement par un passe-bas (36; 37), et en ce qu'ensuite respectivement seule la m-ième valeur de balayage ($y'(m)$; $x'(m)$) de k valeurs de balayage est balayée et fournie pour la suite du calcul, et en ce qu'à partir de celles-ci le facteur de corrélation ($\rho\bar{x}\,\bar{y}\,(m)$) est calculé et comparé à une valeur de consigne de corrélation ($\rho o$).

8. Procédé selon la revendication 7, caractérisé en ce que le facteur de corrélation ($\rho\,\bar{x}\,\bar{y}(m)$) est calculé selon la formule :

$$\rho\overline{x}\,\overline{y}(m) \;=\; \frac{\left|\displaystyle\sum_{n=0}^{N}\overline{x}(m-n)\overline{y}(m-n)\right|}{\displaystyle\sum_{n=0}^{N}\left|\overline{x}(m-n)\overline{y}(m-n)\right|}$$

où m = l'instant où le facteur de corrélation est calculé.

9. Procédé selon la revendication 8, caractérisé en ce qu'un facteur de décimation de balayage (M) d'environ 5 à 20, en particulier 8 à 10, est utilisé.

10. Procédé selon la revendication 6, caractérisé en ce que les moyennes des valeurs à court terme ($y_s(k)$ et $x_s(k)$) du signal d'émission et de réception ($y(k)$; $x(k)$) sont calculées selon la formule suivante :

$$\overline{Z}_s(k) = (1 - a_f)\,|Z(k)| + a_f\,\overline{Z}_s(k\text{-}1),$$

pour des niveaux descendants
si

$$|Z(k)| \leq \overline{Z}_s(k\text{-}1)$$

et

$$\overline{Z}_s(k) = (1 - a_r)\,|Z(k)| + a_r\,\overline{Z}_s(k\text{-}1),$$

pour des niveaux montants
si

$$|Z(k)| > \overline{Z}_s(k\text{-}1),$$

où

$z = y$      pour calculer la valeur à partir du signal d'émission ($y(k)$),
$z = x$      pour calculer la valeur à partir du signal de réception ($x(k)$),

$a_f$ =    un paramètre de la constante de temps pour des niveaux descendants et

ar =    un paramètre de la constante de temps pour des niveaux montants.

Fig.1

Fig. 2

Fig.3

EP 0 592 787 B1